# EUROPEAN PATENT APPLICATION

(11) **EP 4 394 271 A1**
(43) Date of publication of application: **03.07.2024**
(21) Application number: 23190122.4
(22) Date of filing: 07.08.2023
(51) Int. Cl.: F24F 8/10, F24F 8/167, F24F 8/22, F24F 13/28

(54) **AIR PURIFICATION DEVICE**

(30) Priority: 28.12.2022 CN 202211692792
(71) Applicant: Guangdong Midea Consumer Electrics Manufacturing Co. Ltd., Foshan, Guangdong 528311 (CN)
(72) Inventor: LIU, Gaoyuan, Foshan (CN); ZHAO, Tianjian, Foshan (CN); KANG, Ruixiang, Foshan (CN); YU, Dan, Foshan (CN); MAI, Jianzhang, Foshan (CN)
(74) Representative: Ran, Handong

(57) **Abstract**

The present disclosure relates to an air purification device. The air purification device includes a housing and a purification dust collection structure. The housing is provided with an air inlet and an air outlet. An air supply channel is defined between the air inlet and the air outlet, and the purification dust collection structure is located in the air supply channel. The air supply channel is further provided with an ultraviolet lamp and a harmful substance removal structure. The ultraviolet lamp is used to at least oxidize and decompose volatile compounds in air entering the air supply channel, and the harmful substance removal structure is used to at least remove harmful substances generated during the operation of the ultraviolet lamp. The air purification device in present disclosure has improved purification performance.

## Description

### TECHNICAL FIELD

The embodiments of the present disclosure relate to the technical field of domestic appliances, and in particular, to an air purification device.

### BACKGROUND

An air purifier is a device for purifying and cleaning air, and have gradually been widely used with the improvement of the quality of people's life.

The air purifier usually includes a housing and a purification dust collection structure set inside the housing, the housing is provided with an air inlet and an air outlet, and the purification dust collection structure is located between the air inlet and the air outlet. When the air purifier works, the external air enters through the air inlet, is purified and cleaned by the purification dust collection structure, and finally discharged through the air outlet. However, the purification effect of the existing air purifiers is poor.

### SUMMARY

In order to solve the above technical problems or at least partially solve the above technical problems, the embodiments of the present disclosure provide an air purification device.

The embodiments of the present disclosure provide an air purification device, comprising a housing and a purification dust collection structure; the housing is provided with an air inlet and an air outlet, wherein an air supply channel is defined between the air inlet and the air outlet, and the purification dust collection structure is located in the air supply channel; the air supply channel is provided with an ultraviolet lamp and a harmful substance removal structure, wherein the ultraviolet lamp is used to at least oxidize and decompose volatile compounds in air entering the air supply channel, and the harmful substance removal structure is used to at least remove harmful substances generated during operation of the ultraviolet lamp.

The air purification device provided by the embodiments of the present disclosure, by setting the purification dust collection structure and the ultraviolet lamp in the air supply channel defined between the air inlet and the air outlet of the housing, and purifying and collecting dust in the air entering the air supply channel through the air inlet by the purification dust collection structure, and decomposing the volatile compounds in the air entering the air supply channel by the ultraviolet lamp, purifies and removes the volatile compounds in the air. At the same time, the air purification device sets the harmful substance removal structure in the air supply channel for at least removing the harmful substances generated during the operation of the ultraviolet lamp. In other words, after external air enters the air supply channel through the air inlet, the purification dust collection structure can purify the air, and the ultraviolet lamp can purify and remove the volatile compounds in the air. At the same time, by setting the harmful substance removal structure in the air supply channel, the harmful substance removal structure also can remove the harmful substances generated during the operation of the ultraviolet lamp, and thus the purification performance of the air purification device in the embodiment of the present disclosure is improved.

Optionally, the air supply channel is provided with a support member, and the ultraviolet lamp is mounted on the support member.

The ultraviolet lamp is mounted on the support member by setting the support member inside the air supply channel. It means that the ultraviolet lamp is fixed inside the air supply channel by the support member, which is convenient for assembly of the ultraviolet lamp.

Optionally, the support member is a support cylinder of which both ends are open, wherein an inner cavity of the support cylinder is in communication with the air inlet and the air outlet, and the ultraviolet lamp is located inside the support cylinder.

The ultraviolet lamp is set in the inner cavity of the support cylinder. The inner cavity of the support cylinder has a gathering effect on the irradiation light of the ultraviolet lamp, which enhances the intensity of the irradiation light of the ultraviolet lamp. Thus the above configuration can further improve the oxidation and decomposition effect of the ultraviolet lamp on the volatile compounds in the air in the air supply channel, and in turn improve the purification performance and purification effect, which can help to enhance the user experience and the competitiveness of the product. In addition, the above configuration can also prevent the light from the ultraviolet lamp from irradiating the housing or other components for avoiding the aging of the housing or other components due to the irradiation of the ultraviolet lamp.

Optionally, the ultraviolet lamp is detachably connected to the support cylinder.

By detachably connecting the ultraviolet lamp in the support cylinder, on one hand, the assembly is convenient; on the other hand, if one of the ultraviolet lamp and the support cylinder is damaged and needs to be replaced, the one which needs to be replaced can be detached and replaced without integral replacement of the ultraviolet lamp and the support cylinder. It can save the use cost.

Optionally, a cylinder wall of the support cylinder is provided with a first avoiding hole, the ultraviolet lamp extends into the support cylinder through the first avoiding hole, and one end of the ultraviolet lamp passes through the first avoiding hole and is connected to the support cylinder by a fastening structure.

By providing the first avoiding hole in the cylinder wall of the support cylinder, the ultraviolet lamp extends into the support cylinder through the first avoiding hole, and one end of the ultraviolet lamp passes through the first avoiding hole, and the ultraviolet lamp is detachably connected to the support cylinder by the fastening structure, which makes it convenient and easy to assemble and replace the ultraviolet lamp.

Optionally, the fastening structure is located outside the support cylinder. The fastening structure includes a fixed base connected to the support cylinder, and the fixed base is connected to one end of the ultraviolet lamp.

By arranging the fastening structure outside of the support cylinder, the ultraviolet light emitted from the ultraviolet lamp can not directly irradiate the fastening structure directly, which prevents the aging and failure of the fastening structure caused by the long-term direct irradiation of ultraviolet light, and prolongs the service life of the fastening structure, and improves the reliability of the connection between the ultraviolet lamp and the support cylinder. In addition, the fastening structure connects the ultraviolet lamp to the support cylinder from the outside of the support cylinder, which is convenient for assembly.

Optionally, an inner wall of the support cylinder is further provided with a positioning groove, which is arranged opposite to the first avoiding hole, the other end of the ultraviolet lamp extends into the positioning groove;the fixed base is provided with a second avoiding hole at a position corresponding to the first avoiding hole, one end of the ultraviolet lamp passes through the second avoiding hole, and the fixed base is further provided a positioning structure for axial positioning of the ultraviolet lamp.

The ultraviolet lamp extends into the support cylinder through the first avoiding hole for inserting the other end (i.e., the inner end) of the ultraviolet lamp into the positioning groove. The other end of the ultraviolet lamp is prepositioned by the positioning groove, which not only is convenient for assembly but also improves the connection strength of the ultraviolet lamp and the support cylinder. Meanwhile, one end (i.e., the outer end) of the ultraviolet lamp passes through the first avoiding hole of the support cylinder and the second avoiding hole of the fixed base, and the ultraviolet lamp is axially positioned by the positioning structure of the fixed base, which enables high reliability and stability of the structure.

Optionally, the positioning structure includes a fastening hook, and the fastening hook is arranged in the periphery of the second avoiding hole, and is pressed against the outside of the ultraviolet lamp;there are at least two fastening hooks, and the at least two fastening hooks are spaced along the circumference of the second avoiding hole.

With the above configuration, when the ultraviolet lamp have been connected to the support cylinder, which means that one end of the ultraviolet lamp passes through the first avoiding hole and the second avoiding hole, and the other end of the ultraviolet lamp extends into the positioning groove, the fastening hook is pressed against the outside of the ultraviolet lamp for axially positioning the ultraviolet lamp, which is convenient for connection and improves the stability of the structure.

In addition, the connection stability between the ultraviolet lamp and the support cylinder can be further improved by setting multiple fastening hooks along the circumferential direction of the periphery of the second avoiding hole.

Optionally, the support cylinder is a cylindrical support cylinder, and the shape of one side of the fixed base towards the support cylinder matches the shape of the support cylinder.

By setting the support cylinder in a cylindrical shape, the inner cavity of the support cylinder can be larger without changing the overall structure of the housing, and the space utilization rate is higher, which can further improve the purification performance and purification effect of the air purification device in the embodiments of the present disclosure. Furthermore, by making the shape of the side of the fixed base towards the support cylinder matched with the shape of the support cylinder, a better fitting is achieved, which is convenient for assembly and improves the connection strength between the fixed base and the support cylinder.

Optionally, the support cylinder is located between the purification dust collection structure and the air outlet; the support cylinder is connected to the housing, and/or, the purification dust collection structure includes an end cover at the top, and the support cylinder is connected to the end cover.

With the above configuration, by connecting the support cylinder to the end cover at the top of the purification dust collection structure, the connection is convenient, and by setting the purification dust collection structure and the support cylinder in sequence in the direction from the air inlet to the air outlet, the purification performance and purification effect are improved. It is also possible that the support cylinder is connected to the housing; or the support cylinder is connected to both the housing and the end cover for a more reliable connection.

Optionally, when the support cylinder is connected to the end cover, the bottom of the support cylinder includes a first clamping member and the end cover includes a second clamping member, wherein the first clamping member and the second clamping member are in matched clamp-connection; the first clamping member is a fastening hook and a top edge of the end cover includes a flange, wherein the fastening hook clamps a bottom surface of the flange.

With the above configuration, the bottom of the support cylinder and the end cover in the top of the purification dust collection structure can be connected together by the clamp-connection between the first clamping member and the second first clamping member, which is simple in structure and is convenient for assembly.

Optionally, the housing is further provided with a controller therein, wherein the ultraviolet lamp is electrically connected to the controller and the controller is used to control a working state of the ultraviolet lamp.

The working state of the ultraviolet lamp is controlled by the controller, which is convenient to use.

Optionally, the air supply channel is provided with a support cylinder of which both ends are open, wherein an inner cavity of the support cylinder is in communication with the air inlet and the air outlet, the ultraviolet lamp is located inside the support cylinder, and the controller is located outside of the support cylinder; an outer wall of the support cylinder is provided with a containing groove, and the controller is located in the containing groove.

The controller is set outside the support cylinder, on one hand, the ultraviolet light emitted by the ultraviolet lamp may not irradiate the controller directly, which can avoid the aging and failure of the controller caused by the long-term direct irradiation of the ultraviolet light, and prolong the service life of the controller.

In addition, setting the containing groove in the outer wall of the support cylinder and the controller in the containing groove can make the containing groove protect the controller and have good safety.

Optionally, the containing groove is provided with a first mounting member, and the controller is provided with a second mounting member which is in matched connection with the first mounting member.

The first mounting member is set in the containing groove and the second mounting member is set in the controller. The controller can be connected in the containing groove by the matched connection of the first mounting member and the second mounting member, which enables easy assembly and stable connection.

Optionally, a groove wall of the containing groove is provided with a limiting rib, wherein the limiting rib is pressed against the outside of the controller for limiting the position of the controller when the controller is located in the containing groove.

By setting the limiting rib on the groove wall of the containing groove, when the controller is located in the containing groove, the limiting rib can be pressed against the outside of the controller, and thus can pre-position the controller in the containing groove, which is convenient for assembly and further improves the connection stability of the controller in the containing groove.

Optionally, there are at least two ultraviolet lamps, and the at least two ultraviolet lamps are mounted at intervals in the air supply channel.

By mounting multiple ultraviolet lamps at intervals in the air supply channel of the housing, after air enters the air supply channel through the air inlet, the multiple ultraviolet lamps can oxidize and decompose the volatile compounds in the air in the air supply channel, which can further improve the purification performance and purification effect of the air purification device in the embodiments of the present disclosure.

Optionally, the ultraviolet lamp is located between the purification dust collection structure and the air outlet.

When the ultraviolet lamp is set between the purification dust collection structure and the air outlet, after air enters the air supply channel, the air can be purified by the purification dust collection structure first, and then further purified by the ultraviolet lamp, which may have a good purification effect and help to improve the user experience.

Optionally, the air supply channel is provided with a photocatalytic structure; the photocatalytic structure is located within an irradiation range of the ultraviolet lamp and is used to at least oxidize and decompose the volatile compounds in the air in the air supply channel under the effect of the ultraviolet lamp.

The photocatalytic structure, which is set in the air supply channel and is located within the irradiation range of the ultraviolet lamp, can also oxidize and decompose the volatile compounds in the air in the air supply channel under the photocatalytic effect of the ultraviolet lamp. In other words, the photocatalytic structure can further purify the air in the air supply channel under the action of the ultraviolet lamp, which can further improve the purification effect of the air purification device in the embodiments of the present disclosure and have a better purification effect.

Optionally, the photocatalytic structure includes a first photocatalytic net, the first photocatalytic net being set on the purification dust collection structure.

By setting the first photocatalytic net on the purification dust collection structure, on the one hand, the purification dust collection structure can not only purify the air in the air supply channel, but also can oxidize and decompose the volatile compounds in the air under the photocatalytic effect of the ultraviolet lamp. On the other hand, the purification dust collection structure has a high integrity and a high space utilization rate.

Optionally, the photocatalytic structure further includes a second photocatalytic net, wherein the harmful substance removal structure is located between the ultraviolet lamp and the air outlet, and the second photocatalytic net is set between the ultraviolet lamp and the harmful substance removal structure.

The harmful substance removal structure is set between the ultraviolet lamp and the air outlet, in other words, the harmful substance removal structure is set on the downstream side of the ultraviolet lamp along the direction of air circulation in the air supply channel. Thus the harmful substances generated during the operation of the ultraviolet lamp can be removed and purified more fully by the harmful substance removal structure, which can avoid the harmful substances generated during the operation of the ultraviolet lamp being released excessively and further improve the purification performance and purification effect of the air purification device provided by the embodiment of the present disclosure, and provide a good user experience.

In addition, the second photocatalytic net is set between the ultraviolet lamp and the harmful substance removal structure, in other words, the second photocatalytic net is located at the side of the harmful substance removal structure towards the ultraviolet lamp. Thus, on the one hand, it is convenient to further oxidize and decompose the volatile compounds in the air supply channel by the second photocatalytic net under the photocatalytic effect of the ultraviolet lamp, which can help to improve the purification performance and the purification effect. On the other hand, the second photocatalytic net can shelter against the light of the ultraviolet lamp, which can avoid aging and failure of the harmful substance removal structure caused by the direct irradiation of the ultraviolet lamp. In the third aspect, the second photocatalytic net is located on the inlet side of the harmful substance removal structure, which can even the airflow to make the airflow through the harmful substance removal structure more uniform and smoother to achieve a good purification effect.

Optionally, both the first photocatalytic net and the second photocatalytic net include a first net-body and a photocatalyst loaded on the first net-body, the photocatalyst being used for a catalytic oxidation reaction with the volatile compounds under the effect of the ultraviolet lamp; the photocatalyst at least includes titanium dioxide.

With the above configuration, the structure is simple and easy to make.

Optionally, when the photocatalytic structure includes the first photocatalytic net, the purification dust collection structure is a ring structure with a hollow shape, and an inner ring cavity of the ring structure forms part of the air supply channel, and the first photocatalytic net covers the inner ring wall of the ring structure; when the photocatalytic structure further includes the second photocatalytic net, the second photocatalytic net covers one side of the harmful substance removal structure towards the ultraviolet lamp.

By providing the purification dust collection structure as the ring structure with a hollow shape, forming the inner ring cavity of the ring structure as a part of the air supply channel, and covering the first photocatalytic net on the inner ring wall of the ring structure, on the one hand, the first photocatalytic net can be arranged in the irradiation range of the ultraviolet lamp, facilitating the photocatalytic action of the first photocatalytic net and the ultraviolet lamp, so as to further oxidize and decompose the volatile compounds in the air in the air supply channel, and improving the purification performance and purification effect. On the other hand, the first photocatalytic net can shelter against the light of the ultraviolet lamp, which can avoid the aging and failure of the purification dust collection structure caused by the direct irradiation of the ultraviolet lamp and help to prolong the service life of the purification dust collection structure.

By covering the second photocatalytic net on the side of the harmful substance removal structure towards the ultraviolet lamp, on the one hand, the second photocatalytic net can shelter against the light of the ultraviolet lamp and thus avoid the aging and failure of the harmful substance removal structure caused by the direct irradiation of the ultraviolet lamp, on the other hand, the second photocatalytic net is located on the inlet side of the harmful substance removal structure, which can even the airflow to make the airflow through the harmful substance removal structure more uniform and smoother to provide a good purification effect.

Optionally, when the photocatalytic structure includes the first photocatalytic net, the side of the first photocatalytic net towards the inner ring cavity of the ring structure is provided with a first protection net; when the photocatalytic structure includes the second photocatalytic net, the side of the second photocatalytic net towards the ultraviolet lamp is provided with a second protection net.

By setting the first protection net at the side of the first photocatalytic net towards the air outlet channel, the first protection net can be used to support the first photocatalytic net and the purification dust collection structure, which enhances the structural strength and is convenient for assembly.

By setting the second protection net at the side of the second photocatalytic net towards the ultraviolet lamp, the second protection net can be used to support the second photocatalytic net and the harmful substance removal structure, which enhances the structural strength and is convenient for assembly.

In some embodiments, the harmful substance removal structure is located between the ultraviolet lamp and the air outlet.

The harmful substance removal structure is set between the ultraviolet lamp and the air outlet, in other words, the harmful substance removal structure is set on the downstream side of the ultraviolet lamp along the direction of air circulation in the air supply channel. Thus the harmful substances generated during the operation of the ultraviolet lamp can be removed and purified more fully by the harmful substance removal structure, which can avoid the harmful substances generated during the operation of the ultraviolet lamp being released excessively and further improve the purification performance and purification effect of the air purification device provided by the embodiment of the present disclosure, and provide a good user experience.

Optionally, the air supply channel is provided with a support cylinder of which both ends are open, wherein an inner cavity of the support cylinder is in communication with the air inlet and the air outlet, the ultraviolet lamp and at least part of the harmful substance removal structure are located in the support cylinder; the support cylinder is provided with a support structure for supporting the harmful substance removal structure; and/or an outer edge of the harmful substance removal structure is provided with a resilient sealing member for sealing a space between the harmful substance removal structure and the inner wall of the support cylinder.

By setting the support cylinder of which both ends are open in the air supply channel and arranging the ultraviolet lamp and at least part of the harmful substance removal structure in the support cylinder, on the one hand, a high space utilization rate and good integrity are provided, and the assembly is convenient. On the other hand, the inner cavity of the support cylinder has a gathering and collecting effect on the harmful substances generated during the operation of the ultraviolet lamp, which can facilitate full contact between the harmful substances generated during the operation of the ultraviolet lamp and the harmful substance removal structure. Thus it can improve the removal efficiency of the harmful substance removal structure on the harmful substances generated during the operation of the ultraviolet lamp and help to improve the purification performance and purification effect and the healthiness of the user.

By setting the support structure in the support cylinder and setting the harmful substance removal structure on the support structure, the assembly is convenient.

In addition, by setting the resilient sealing member in the outer edge of the harmful substance removal structure, the resilient sealing member can seal the space between the inner wall of the support cylinder and the outer wall of the harmful substance removal structure. Thus the air in the air supply channel can pass through the harmful substance removal structure as much as possible and then be discharged through the air outlet, which can further improve the efficiency of the harmful substance removal structure in removing the harmful substances generated during the operation of the ultraviolet lamp.

Optionally, when the support cylinder is provided with a support structure for supporting the harmful substance removal structure, the support structure is a support flange set along the circumference of the inner wall of the support cylinder.

The configuration of setting the harmful substance removal structure on the support flange inside the support cylinder enables stable support and is convenient for assembly.

Optionally, the harmful substance includes ozone; the harmful substance removal structure includes an ozone catalytic structure, which is used for catalytic oxidation of the ozone; the harmful substance removal structure is located between the ultraviolet lamp and the air outlet.

With the above configuration, the harmful substance removal structure is set on the downstream side of the ultraviolet lamp. Thus when the ozone generated during the operation of the ultraviolet lamp passes through the harmful substance removal structure, the ozone catalytic structure can catalyze and oxidize the ozone generated during the operation of the ultraviolet lamp, in other words, the ozone catalytic structure can decompose the ozone generated during the operation of the ultraviolet lamp, which can improve the purification performance and purification effect and further improve cleanliness and health safety of the air discharged through the air outlet.

Optionally, the ozone catalytic structure includes a second net-body and an ozone catalyst loaded on the second net-body, the ozone catalyst being used for a catalytic oxidation reaction with the ozone for removing the ozone; the ozone catalyst at least includes manganese sulfate.

Optionally, the harmful substance removal structure includes at least two ozone catalytic structures, the at least two ozone catalytic structures being set in a cascade along the direction from the ultraviolet lamp to the air outlet.

By setting multiple ozone catalytic structures along the direction from the ultraviolet lamp to the air outlet, the removal efficiency of the harmful substance removal structure on the ozone generated during the operation of the ultraviolet lamp can further be improved, and the purification performance and purification effect of the air purifier in the embodiment of the present disclosure can be improved.

Optionally, the purification dust collection structure includes at least a first filter and a second filter which surrounds the first filter, wherein the first filter and the second filter correspond to different types of pollutants to be purified; the types of pollutants include at least formaldehyde and dust.

With the above configuration, the purification dust collection structure can remove multiple types of pollutants, such as formaldehyde, dust, and so on, in the air in the air supply channel with a better purification effect.

Optionally, the housing includes a lower housing and an upper housing located above the lower housing; the upper housing is provided with a fan member therein; the purification dust collection structure, the ultraviolet lamp, and the harmful substance removal structure are located in the lower housing; at least part of the air inlet is opened in a side wall of the lower housing, and at least part of the air outlet is opened in the top of the upper housing.

In the above technical scheme, by setting the housing as the lower housing and the upper housing, setting the purification dust collection structure, the ultraviolet lamp and the harmful substance removal structure in the lower housing, and setting the fan member in the upper housing, when disassembling and separating the upper housing and the lower housing, the fan member and the upper housing can be disassembled together, and the ultraviolet lamp, the harmful substance removal structure, the purification dust collection structure, and the lower housing can be disassembled together, which is convenient and quick for disassembly. By forming the air inlet in the lower housing for air entering and the air outlet in the upper housing for air discharge, the air can enter through the air inlet, and then be purified by the purification dust collection structure, the ultraviolet lamp and the harmful substance removal structure, and the purified clean air can be discharged from the air outlet.

### BRIEF DESCRIPTION OF THE DRAWINGS

The drawings, which are incorporated herein and constitute a part of the specification, illustrate embodiments consistent with the present disclosure, and together with the description serve to explain the principles of the present disclosure.

For the purpose of more clearly illustrating the embodiments of the present disclosure or the technical solution in the prior art, a brief description of the accompanying drawings to be used in describing the embodiments or the prior art is given below. It is obvious for ordinary persons skilled in the art to obtain other accompanying drawings from these accompanying drawings without any inventive effort.
FIG. 1 is an axonometric view of an air purification device according to an embodiment of the present disclosure;
FIG. 2 is an exploded view of an air purification device according to an embodiment of the present disclosure;
FIG. 3 is an assembly diagram of an air purification device according to an embodiment of the present disclosure;
FIG. 4 is an axonometric view of a support cylinder of an air purification device according to an embodiment of the present disclosure;
FIG. 5 is a front view of a support cylinder of an air purification device according to an embodiment of the present disclosure;
FIG. 6 is an axonometric view of a fixed base of an air purification device according to an embodiment of the present disclosure;
FIG. 7 is a front view of a fixed base of an air purification device according to an embodiment of the present disclosure;
FIG. 8 is a top view of a fixed base of an air purification device according to an embodiment of the present disclosure;
FIG. 9 is a side view of a fixed base of an air purification device according to an embodiment of the present disclosure;
FIG. 10 is a structural diagram of an ultraviolet lamp of an air purification device according to an embodiment of the present disclosure;
FIG. 11 is a structural diagram of a controller of an air purification device according to an embodiment of the present disclosure;
FIG. 12 is an axonometric view of a purification dust collection structure of an air purification device according to an embodiment of the present disclosure;
FIG. 13 is a cross-sectional view of a purification dust collection structure of an air purification device according to an embodiment of the present disclosure;
FIG. 14 is a top view of a harmful substance removal structure of an air purification device according to an embodiment of the present disclosure;
FIG. 15 is a cross-sectional view of a harmful substance removal structure of an air purification device according to an embodiment of the present disclosure.

In the figures: 1, housing; 11, upper housing; 12, lower housing; 13, air inlet; 14, air outlet; 2, purification dust collection structure; 21, first filter; 22, second filter; 23, end cover; 3, ultraviolet lamp; 31, lamp; 32, lamp head; 33, lamp tail; 34, lamp holder; 4, harmful substance removal structure; 41, ozone catalytic structure; 42, resilient sealing member; 5, support member; 51, first avoiding hole; 52, positioning groove; 53, first clamping member; 54, containing groove; 541, first mounting member; 542, limiting rib; 55, support structure; 6, fixed base; 61, second avoiding hole; 62, fastening hook; 7, controller; 71, second mounting member; 81, first photocatalytic net; 82, second photocatalytic net; 91, first protection net; 92, second protection net.

### DETAILED DESCRIPTION OF THE EMBODIMENTS

In order to understand the object, features and advantages of the embodiments of the present disclosure clearly, more details of the embodiments of the present disclosure may be described. It should be noted that the embodiments of the present disclosure and features of the embodiments can be combined with each other without conflict.

In the following description, specific details are explained in order to make the embodiments of the present disclosure understandable. However, the embodiments of the present disclosure can be implemented in other ways than the described herein; obviously, the embodiments in the specification are only partial embodiments of the present disclosure and not all the embodiments.

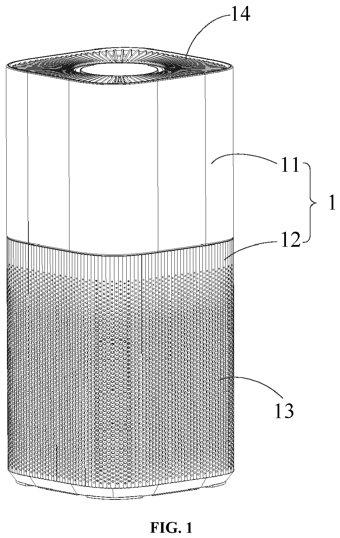

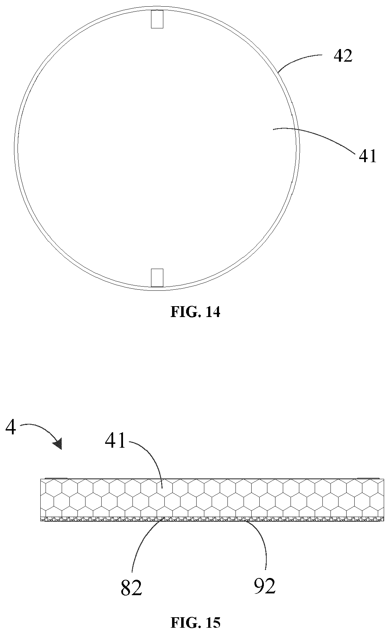

As illustrated in FIG. 1 to FIG. 15, the embodiments provide an air purification device, for example, an air purifier. The following embodiments provide a detailed explanation and illustration of the air purifier as an example of the air purification device.

Specifically, the air purifier includes a housing 1 and a purification dust collection structure 2. The housing 1 has an air inlet 13 and an air outlet 14. An air supply channel is defined between the air inlet 13 and the air outlet 14, the purification dust collection structure 2 is located in the air supply channel and can purify air entering the air supply channel.

An ultraviolet lamp 3 and a harmful substance removal structure 4 are also installed inside the air supply channel. The ultraviolet lamp 3 is used to at least oxidize and decompose volatile compounds (such as toluene, benzene, ammonia, and hydrogen sulfide) in the air entering the air supply channel, and the harmful substance removal structure 4 is used to at lest remove the harmful substances generated during the operation of the ultraviolet lamp 3.

During purification, the purification dust collection structure 2 is used to adsorb and purify the pollutants in the air entering the air supply channel. The ultraviolet lamp 3 is used to form a photocatalytic system in the air supply channel to oxidize and decompose the volatile compounds in the air in the air supply channel for purifying and removing the volatile compounds in the air. The harmful substance removal structure 4 is used to remove the harmful substances generated during the operation of the ultraviolet lamp 3 to prevent the harmful substances generated by the ultraviolet lamp 3 from discharging through the air outlet 14.

Specifically, the ultraviolet lamp 3 emits ultraviolet light with a preset wavelength (such as 10-200 nm) to form the photocatalytic system. The ultraviolet light and the air in the air supply channel undergo a photocatalytic reaction to generate highly reactive oxides, such as hydroxyl radicals, ozone, etc. The highly reactive oxides react with the volatile compounds in the air in the air supply channel to generate carbon dioxide and some intermediate products such as aldehydes, acids, etc. The purification effect may be better by removing the volatile compounds from the air in the air supply channel by oxidation and decomposition by the ultraviolet lamp 3.

The ultraviolet lamp 3 may be, for example, a mercury lamp, a UV-LED lamp, etc., and the power may be set to 2 W or more than 2 W

The purification principle of the air purifier in the present embodiment is: external air enters the air supply channel inside the housing 1 through the air inlet 13; the purification dust collection structure 2 and the ultraviolet lamp 3 inside the air supply channel purify the air in the air supply channel; meanwhile, the harmful substance removal structure 4 purifies and removes the harmful substances generated during operation of the ultraviolet lamp 3 for purification of the air; the clean air after purification, i.e., the final purified clean air, is discharged through the air outlet 14.

The air purifier provided by the present embodiment, by setting the purification dust collection structure 2 and the ultraviolet lamp 3 in the air supply channel defined between the air inlet 13 and the air outlet 14 of the housing 1, and purifying and collecting dust in the air entering the air supply channel through the air inlet 13 by the purification dust collection structure 2, and decomposing the volatile compounds in the air entering the air supply channel by the ultraviolet lamp 3, purifies and removes the volatile compounds in the air. At the same time, the air purification device sets the harmful substance removal structure 4 in the air supply channel for at least removing the harmful substances generated during the operation of the ultraviolet lamp 3. In other words, after external air enters the air supply channel through the air inlet 13, the purification dust collection structure 2 can purify the air, and the ultraviolet lamp 3 can purify and remove the volatile compounds in the air. At the same time, by setting the harmful substance removal structure 4 in the air supply channel, the harmful substance removal structure 4 also can remove the harmful substances generated during the operation of the ultraviolet lamp 3, and thus the purification performance of the air purification device in the embodiment of the present disclosure is improved.

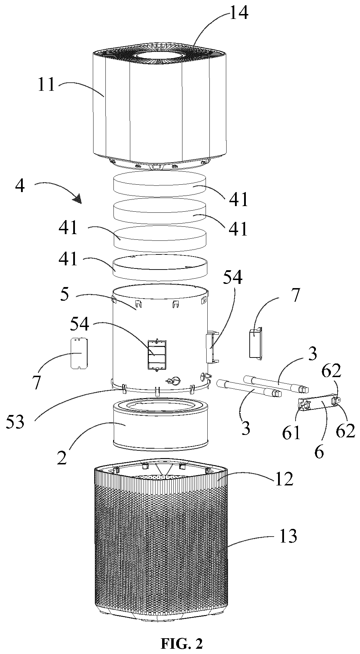

In some embodiments, as shown in FIG. 2 to FIG. 5, a support member 5 is provided inside the air supply channel, and the ultraviolet lamp 3 is mounted on the support member 5.

In other words, the ultraviolet lamp 3 is mounted on the support member 5 by setting the support member 5 inside the air supply channel. It means that the ultraviolet lamp 3 can be fixed inside the air supply channel by the support member 5, which is convenient for assembly of the ultraviolet lamp 3.

In specific implementations, the support member 5 is detachably connected with the housing 1 for easy assembly, and moreover, for facilitating the mounting and replacement of the ultraviolet lamp 3.

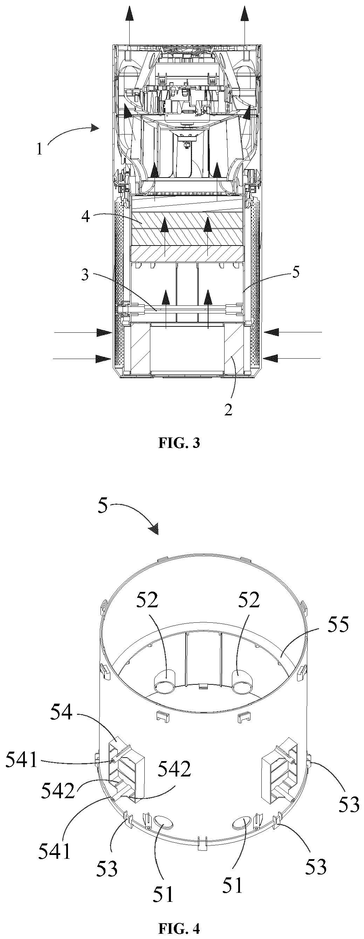

In some embodiments, as shown in FIG. 2 and FIG. 4, the support member 5 is a support cylinder of which both ends are open, and an inner cavity of the support cylinder is in communication with the air inlet 13 and the air outlet 14, and the ultraviolet lamp 3 is located in the support cylinder.

In order to avoid aging and failure, the support cylinder may be made of, for example, acrylonitrile butadiene styrene (ABS) copolymers and acrylonitrile styrene acrylate (ASA) copolymers, for better sun protection and shading effects.

In specific implementations, one open end of the support cylinder is in communication with the air inlet 13, and the other open end of the support cylinder is in communication with the air outlet 14, so the entire inner cavity is located in the air supply channel with high space utilization.

Exemplarily, the air inlet 13 is located in the lower part of the housing 1, the air outlet 14 is located in the upper part of the housing 1, a top opening of the support member 5 is in communication with the air outlet 14, and the bottom opening of the support member 5 is in communication with the air inlet 13.

The ultraviolet lamp 3 is set in the inner cavity of the support cylinder. The inner cavity of the support cylinder has a gathering effect on the irradiation light of the ultraviolet lamp 3, which enhances the intensity of the irradiation light of the ultraviolet lamp 3 and increases the contact area between the ultraviolet light from the ultraviolet lamp 3 and the air. Thus the above configuration can further improve the oxidation and decomposition effect of the ultraviolet lamp 3 on the volatile compounds in the air in the air supply channel, and in turn improve the purification performance and purification effect, which can help to enhance the user experience and the competitiveness of the product.

In addition, the above configuration can also prevent the light from the ultraviolet lamp from irradiating the housing or other components for avoiding the aging of the housing or other components due to the irradiation of the ultraviolet lamp.

It should be noted that, in some implementations, the support cylinder may be a separate cylinder, which means that the support cylinder and the housing 1 may be made separately, and then assembled together subsequently.

In some implementations, the support cylinder may also be integrally molded with the housing 1, and such configuration enables the support cylinder and the housing 1 as an integral structure to have an improved structural strength and have better performance in bearing the ultraviolet lamp 3. Thus the implementation can improve the stability of the ultraviolet lamp 3 and ensure the working performance of the air purification device.

In other implementations, the support cylinder may be not provided, and the ultraviolet lamp 3 is directly arranged inside the housing 1.

In some embodiments, the ultraviolet lamp 3 may be detachably connected to the support cylinder.

By detachably connecting the ultraviolet lamp 3 in the support cylinder, on one hand, it is easy to assemble and maintain the ultraviolet lamp 3; on the other hand, if one of the ultraviolet lamp 3 and the support cylinder is damaged and needs to be replaced, the one which needs to be replaced can be detached and replaced without integral replacement of the ultraviolet lamp 3 and the support cylinder. It can save the use cost.

In some embodiments, as shown in FIG. 2, FIG. 4 and FIG. 5, a first avoiding hole 51 is provided in a cylinder wall of the support cylinder. The ultraviolet lamp 3 may extend into the support cylinder through the first avoiding hole 51. One end of the ultraviolet lamp 3 passes through the first avoiding hole 51 and is connected to the support cylinder by a fastening structure.

It can be understood that the first avoiding hole 51 is a hole opened in the cylinder wall of the support cylinder, and the diameter of the first avoiding hole 51 is larger than the diameter of the ultraviolet lamp 3.

By opening the first avoiding hole 51 in the cylinder wall of the support cylinder, the ultraviolet lamp 3 extends into the support cylinder through the first avoiding hole 51, and one end of the ultraviolet lamp 3 passes through the first avoiding hole 51. Since the ultraviolet lamp 3 is connected to the support cylinder by the fastening structure detachably, it is convenient and easy to assemble and replace the ultraviolet lamp 3.

In some embodiments, as shown in FIG. 2, FIG. 6 to FIG. 9, the fastening structure is located outside the support cylinder. The fastening structure includes a fixed base 6 connected to the support cylinder, and the fixed base 6 is connected to one end of the ultraviolet lamp 3.

By arranging the fastening structure outside of the support cylinder, the ultraviolet light emitted from the ultraviolet lamp 3 can not directly irradiate the fastening structure directly, which prevents the aging and failure of the fastening structure caused by the long-term direct irradiation of ultraviolet light, and prolongs the service life of the fastening structure, and improves the reliability of the connection between the ultraviolet lamp 3 and the support cylinder.

In order to prevent aging and failure, the fixed base 6 may be made of sheet metal, ABS, and ASA, with a good sun protection and shading effect.

In some embodiments, the fixed base 6 is located outside the support cylinder, and the fixed base 6 connects the ultraviolet lamp 3 to the support cylinder from the outside of the support cylinder, which is convenient for assembly and replacement.

In some embodiments, as shown in FIG. 4, the inner wall of the support cylinder is further provided with a positioning groove 52, which is arranged opposite to the first avoiding hole 51. The other end of the ultraviolet lamp 3 extends into the positioning groove 52. The fixed base 6 is provided with a second avoiding hole 61 at a position corresponding to the first avoiding hole 51, one end of the ultraviolet lamp 3 passes through the second avoiding hole 61, and the fixed base 6 is further provided a positioning structure for axial positioning of the ultraviolet lamp 3.

It can be understood that one end of the ultraviolet lamp 3 (i.e., the outer end) passes through the first avoiding hole 51 on the support cylinder and the other end of the ultraviolet lamp 3(i.e., the inner end) extends into the positioning groove 52. That is, both ends of the ultraviolet lamp 3 are in contact with and connected to the support cylinder, which, on the one hand, improves the connection strength between the ultraviolet lamp 3 and the support cylinder, and on the other hand, increases the irradiation area of the ultraviolet lamp 3 in the support cylinder and enhances the photocatalytic intensity, and in turn helps to improve the purification performance and purification effect.

In specific implementations, the positioning groove 52 can preposition and limit the ultraviolet lamp 3, and the shape of the inner cavity of the positioning groove 52 may, for example, match with the radial outer contour of the ultraviolet lamp 3.

The ultraviolet lamp 3 extends into the support cylinder through the first avoiding hole 51 for inserting the other end (i.e., the inner end) of the ultraviolet lamp 3 into the positioning groove 52. The other end of the ultraviolet lamp 3 is prepositioned by the positioning groove 52, which not only is convenient for assembly, but also improves the connection strength of the ultraviolet lamp 3 and the support cylinder. Meanwhile, one end (i.e., the outer end) of the ultraviolet lamp 3 passes through the first avoiding hole 51 of the support cylinder and the second avoiding hole 61 of the fixed base 6, and the ultraviolet lamp 3 is axially positioned by the positioning structure of the fixed base 6, which enables high reliability and stability of the structure.

In the specific assembly, the inner end of the ultraviolet lamp 3 extends into the support cylinder through the first avoiding hole 51 and into the positioning groove 52. At the same time, the outer end of the ultraviolet lamp 3 passes through the first avoiding 51. Then the second avoiding hole 61 of the fixed base 6 sleeves the outer end of the ultraviolet lamp 3, and the fixed base 6 is connected to the support cylinder. When the fixed base and support cylinder have been connected, the positioning structure of the fixed base 6 is pressed against one end of the ultraviolet lamp 3, so that the ultraviolet lamp 3 can be connected to the support cylinder.

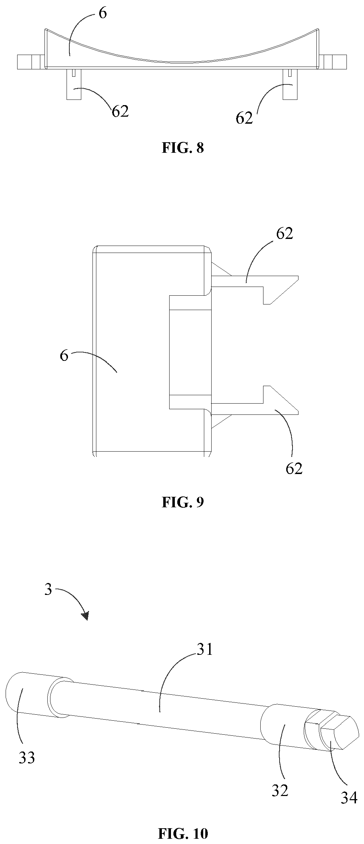

Exemplarily, as shown in FIG. 10, the ultraviolet lamp 3 includes a lamp 31, a lamp head 32, a lamp tail 33, and a lamp holder 34. The lamp tail 33 is connected to one end of the lamp 31 which is close to the positioning groove 52 to form the inner end of the ultraviolet lamp 3; the lamp head 32 is connected to one end of the lamp 31 which is close to the first avoiding hole 51. One end of the lamp head 32 away from the lamp 31 is also connected to the lamp holder 34, and the lamp head 32 and the lamp holder 34 together from the outer end of the ultraviolet lamp 3.

In specific use, the lamp tail 33 of the ultraviolet lamp 3 extends into the support cylinder through the first avoiding hole 51 and into the positioning groove 52, and the lamp head 32 of the ultraviolet lamp 3 passes through the first avoiding 51. The second avoiding hole 61 of the fixed base 6 sleeves the lamp holder 34 of the ultraviolet lamp 3, and when the fixed base 6 and support cylinder have been connected, the positioning structure of the fixed base 6 presses against the lamp holder 34, so that the ultraviolet lamp 3 can be connected to the support cylinder.

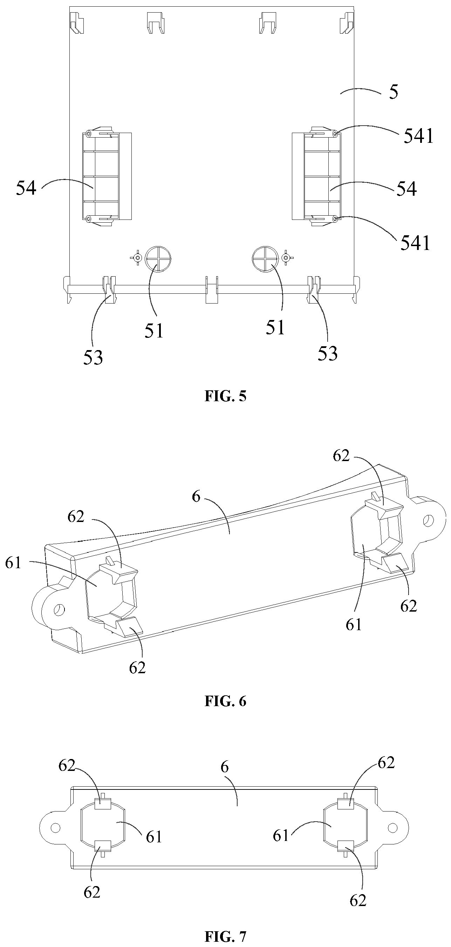

In some embodiments, as shown in FIG. 6, FIG. 8 and FIG. 9, the positioning structure includes a fastening hook 62, which is set in the periphery of the second avoiding hole 61, and one end of the fastening hook 62 away from the fixed base 6 extends towards the position where the center line of the second avoiding hole 61 is located. That is, the orthographic projection of the end of the fastening hook 62 away from the fixed base 6 on the fixed base 6 is in the area where the second avoidance hole 61 is located in order to axially position the ultraviolet lamp 3 by the fastening hook 62. When the fixed base 6, the ultraviolet lamp 3 and the support cylinder have been connected, the fastening hook is pressed against the outside of the ultraviolet lamp 3.

With the above configuration, when the ultraviolet lamp 3 have been connected to the support cylinder, which means that one end of the ultraviolet lamp 3 passes through the first avoiding hole 51 and the second avoiding hole 61, and the other end of the ultraviolet lamp 3 extends into the positioning groove 52, the fastening hook 62 is pressed against the outside of the ultraviolet lamp 3 for axially positioning the ultraviolet lamp 3, which is convenient for connection and improves the stability of the structure.

In some embodiments, there are at least two fastening hooks 62, and the at least two fastening hooks 62 are arranged at intervals along the circumference of the second avoiding hole 61. All the fastening hooks 62 together enclose a positioning space for axially positioning the ultraviolet lamp 3, which can further improve the connection stability between the ultraviolet lamp 3 and the support cylinder.

In can be understood that when the fixed base 6, the ultraviolet lamp 3 and the support cylinder have been connected, one end of each fastening hook 62 away from the fixed base 6 is pressed against the outside of the ultraviolet lamp 3, which further improves the function for axially positioning the ultraviolet lamp 3 and enables the connection between the ultraviolet lamp 3 and the support cylinder more solid, reliable and stable.

In specific implementations, a reinforcing rib is provided between each fastening hook 62 and the fixed base 6. One end of the reinforcing rib is connected to one side of the fastening hook 62 away from the second avoiding hole 61, and the other end of the reinforcing rib is connected to one side of the fixed base 6 away from the support cylinder, which can improve the connection strength between the fastening hook 62 and the fixed base 6.

In some embodiments, as shown in FIG. 4 to FIG. 8, the support cylinder is a cylindrical support cylinder, and the shape of one side of the fixed base 6 close to the support cylinder matches the shape of the support cylinder.

By setting the support cylinder in a cylindrical shape, the inner cavity of the support cylinder can be larger without changing the overall structure of the housing 1, and the space utilization rate is higher, and a larger space for oxidation and decomposition may be formed in the support cylinder, which can further improve the purification performance and purification effect of the air purification device in the embodiments of the present disclosure. Furthermore, by making the shape of the side of the fixed base 6 towards the support cylinder matched with the shape of the support cylinder, a better fitting is achieved, which is convenient for assembly and improves the connection strength between the fixed base 6 and the support cylinder.

In other implementations, the support cylinder may also be other structures, such as an oval barrel or a square barrel.

In some embodiments, as shown in FIG. 2, FIG. 3, FIG. 12 and FIG. 13, the support cylinder is located between the purification dust collection structure 2 and the air outlet 14.

In some embodiments, there may be an end cover 23 on the top of the purification dust collection structure 2, and the support cylinder is connected to the end cover 23.

By setting the end cover 23 on the top of the purification dust collection structure 2 and connecting the support cylinder to the end cover 23 on the top of the purification dust collection structure 2, the support cylinder and the purification dust collection structure 2 are connected to form an integral structure and then assembled into the housing 1, which is convenient for connection, and the purification dust collection structure 2 and the support cylinder are arranged in sequence in the direction from the air inlet 13 to the air outlet 14, and external air enters the air supply channel through the air inlet 13, and is firstly purified by the purification dust collection structure 2, and then undergoes a photocatalytic reaction by the ultraviolet lamp 3 inside the support cylinder, which helps to improve the purification performance and purification effect.

Furthermore, the end cover 23 on the top of the purification dust collection structure 2 can also prevent the ultraviolet lamp 3 from directly irradiating the purification area of the purification dust collection structure 2 and prevent the aging and failure of the purification dust collection structure 2, which can prolong the service life of the purification dust collection structure 2.

The end cover 23 may be made of sheet metal, ABS, and ASA, with a good sun protection and shading effect.

In specific implementations, when the support is connected to the end cover 23, as shown in FIG. 2, FIG. 4 and FIG. 5, the bottom of the support cylinder includes a first clamping member 53, and the end cover 23 includes a second clamping member. The first clamping member 53 and the second clamping member are in a matched clamp-connection, thus the support cylinder and the end cover 23 on the top of the purification dust collection structure 2 can be detachably connected, which is not only convenient for assembly, but also is convenient for replacement and maintenance.

Furthermore, the first clamping member 53 is the fastening hook 62, and a top edge of the end cover 23 includes a flange. The fastening hook 62 clamps the bottom surface of the flange, which is easy to make and convenient for connection.

In some embodiments, the support cylinder may also be connected to the housing 1.

Exemplarily, the housing 1 may be provided with a first connection member such as a buckle, and an outer wall of the support cylinder may be provided with a second connection member such as a slot which has a matched connection with the first connection member, thus the support cylinder can be mounted on the housing 1 through the matched connection of the first connection member and the second connection member.

There may be a plurality of first connection members, and the plurality of first connection members may be spaced along the circumference of the housing. Correspondingly, there may also be a plurality of second connection members, one first connection member corresponds to one second connection member, which can make the connection between the support cylinder and the housing 1 more solid and reliable, and help to enhance the structural stability of the air purifier of the present disclosure.

Furthermore, in some other embodiments, the support cylinder may be connected to the end cover 23 of the purification dust collection structure 2 and the housing 1, which can further improve the connection stability of the support cylinder and thus improve the stability of the ultraviolet lamp and other components inside the support cylinder.

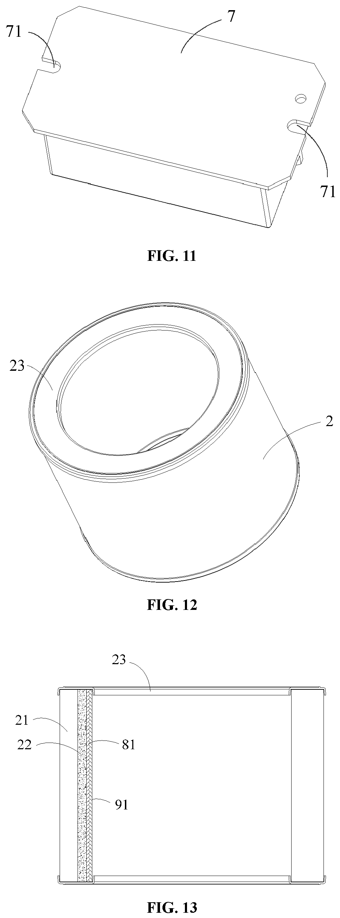

In some embodiments, as shown in FIG. 2 and FIG. 11, the housing 1 may also be provided with a controller 7, which is connected electrically to the ultraviolet lamp 3 and used to control a working state of the ultraviolet lamp 3.

The working state of the ultraviolet lamp 3 is controlled by the controller 7, which is convenient to use. The working state of the ultraviolet lamp 3 may include power-on, power-off, power adjustment, etc. of the ultraviolet lamp 3.

In some embodiments, as shown in FIG. 2 to FIG. 5 and FIG. 11, the air supply channel is provided therein with a support cylinder of which both ends are open, and an inner cavity of the support cylinder is in communication with the air inlet 13 and the air outlet 14. The ultraviolet lamp 3 is located in the support cylinder. The controller 7 is located outside the support cylinder, and the outer wall of the support cylinder is provided with a containing groove 54, and the controller is located in the containing groove 54. Specifically, the controller 7 is a ballast.

The controller 7 is set in the outside of the support cylinder, on one hand, the ultraviolet light emitted by the ultraviolet lamp 3 may not irradiate the controller 7 directly, which can avoid the aging and failure of the controller 7 caused by the long-term direct irradiation of the ultraviolet light, and prolong the service life of the controller 7.

In addition, setting the containing groove 54 in the outer wall of the support cylinder and the controller 7 in the containing groove 54 can make the containing groove 54 to protect the controller 7 and have a good safety.

In specific implementations, the shape of an inner cavity of the containing groove 54 matches the outer contour of the ballast.

In some embodiments, as shown in FIG. 4, FIG. 5 and FIG. 11, the containing groove 54 is provided with a first mounting member 541, and the controller 7 is provided with a second mounting member 71 which is in matched connection with the first mounting member 541.

In other words, the first mounting member 541 is set in the containing groove 54 and the second mounting member 71 is set in the controller 7. The controller 7 can be connected in the containing groove 54 by the matched connection of the first mounting member 541 and the second mounting member 71 for easy assembly and stable connection.

Exemplarily, the first mounting member 541 is a threaded hole with internal threads, and the second mounting member 71 includes a stud with external threads and a mounting hole for the stud to be inserted. The controller can be mounted in the containing groove 54 of the housing 1 by inserting the stud in the mounting hole and connecting the stud with the threads of the threaded hole in the containing groove 54.

In some embodiments, as shown in FIG. 4, a groove wall of the containing groove 54 is provided with a limiting rib 542, which is used to be pressed against the outside of the controller 7 for limiting the position of the controller 7 when the controller 7 is located in the containing groove 54.

By setting the limiting rib 542 on the groove wall of the containing groove 54, when the controller is located in the containing groove 54, the limiting rib 542 can be pressed against the outside of the controller 7, and thus can limit the position of the controller 7 to pre-position the controller 7 in the containing groove 54, which is convenient for assembly and further improve the connection stability of the controller 7 in the containing groove 54.

In some embodiments, there are at least two ultraviolet lamps 3, and the at least two ultraviolet lamps 3 are mounted at intervals in the air supply channel.

By mounting multiple ultraviolet lamp 3s at intervals in the air supply channel of the housing 1, after air enters the air supply channel through the air inlet 13, the multiple ultraviolet lamp 3 can oxidize and decompose the volatile compounds in the air in the air supply channel, which can further improve the purification performance and purification effect of the air purification device in the embodiments of the present disclosure.

In specific implementations, the multiple ultraviolet lamps 3 may be located in a same horizontal plane. The multiple ultraviolet lamps 3 may also be located in different horizontal planes, for example, the multiple ultraviolet lamps 3 may be mounted at intervals along the extension direction of the air supply channel.

There may be one controller, and the working states of all the ultraviolet lamps 3 are controlled by one controller. There may also be multiple controllers, and one controller corresponds to one ultraviolet lamp 3.

In some embodiments, as shown in FIG. 2 and FIG. 3, the ultraviolet lamp 3 is located between the purification dust collection structure 2 and the air outlet 14.

When the ultraviolet lamp 3 is set between the purification dust collection structure 2 and the air outlet 14, after air enters the air supply channel, the air can be purified by the purification dust collection structure 2, and then the volatile compounds in the air can be photocatalytically oxidized by the ultraviolet lamp 3, which may have a good purification effect and help to improve the user experience.

In some embodiments, the air supply channel may also be provided with a photocatalytic structure, which is located within the irradiation range of the ultraviolet lamp 3 and is used to at least oxidize and decompose the volatile compounds in the air in the air supply channel under the effect of the ultraviolet lamp 3.

In other words, the ultraviolet lamp 3 emits ultraviolet light, and the ultraviolet light irradiates the photocatalytic structure. The ultraviolet lamp 3 and the photocatalytic structure together form a photocatalytic system to generate highly active oxides to oxidize and decompose the volatile compounds in the air in the air supply channel, and thus further purify and remove the volatile compounds in the air and improve the purification performance and the purification effect.

The photocatalytic structure, which is set in the air supply channel and is located within the irradiation range of the ultraviolet lamp 3, can also oxidize and decompose the volatile compounds in the air in the air supply channel under the photocatalytic effect of the ultraviolet lamp 3. In other words, the photocatalytic structure can further purify the air in the air supply channel under the action of the ultraviolet lamp 3, which can further improve the purification effect of the air purification device in the embodiments of the present disclosure and have a better purification effect.

In some embodiments, the photocatalytic structure includes a first photocatalytic net 81, and the first photocatalytic net 81 is set on the purification dust collection structure 2.

By setting the first photocatalytic net 81 on the purification dust collection structure 2, on the one hand, the purification dust collection structure 2 can not only purify the air in the air supply channel, but also can oxidize and decompose the volatile compounds in the air under the photocatalytic effect of the ultraviolet lamp 3. On the other hand, the first photocatalytic net 81 and the purification dust collection structure 2 can form an integral structure, which is convenient for assembly and has a high space utilization rate.

In some other embodiments, the first photocatalytic net 81 may also be set between the purification dust collection structure 2 and the ultraviolet lamp 3.

In specific implementations, the purification dust collection structure 2 may be a ring structure with a hollow shape, and an inner ring cavity of the ring structure forms part of the air supply channel, and the first photocatalytic net 81 covers an inner ring wall of the ring structure.

By providing the purification dust collection structure 2 as the ring structure with a hollow shape, forming the inner ring cavity of the ring structure as a part of the air supply channel, and covering the first photocatalytic net 81 on the inner ring wall of the ring structure, on the one hand, the first photocatalytic net 81 can be arranged in the irradiation range of the ultraviolet lamp 3, facilitating the photocatalytic action of the first photocatalytic net 81 and the ultraviolet lamp 3, so as to further oxidize and decompose the volatile compounds in the air in the air supply channel, and improving the purification performance and purification effect. On the other hand, the first photocatalytic net 81 can shelter against the light of the ultraviolet lamp 3, which can avoid the aging and failure of the purification dust collection structure 2 caused by the direct irradiation of the ultraviolet lamp 3 and help to prolong the service life of the purification dust collection structure 2.

In some embodiments, the photocatalytic structure also includes a second photocatalytic net 82, and the harmful substance removal structure 4 is located between the ultraviolet lamp 3 and the air outlet 14, and the second photocatalytic net 82 is set between the ultraviolet lamp 3 and the harmful substance removal structure 4.

The harmful substance removal structure 4 is set between the ultraviolet lamp 3 and the air outlet 14, in other words, the harmful substance removal structure 4 is set on the downstream side of the ultraviolet lamp 3 along the direction of air circulation in the air supply channel. Thus the harmful substances generated during the operation of the ultraviolet lamp 3 can be removed and purified more fully by the harmful substance removal structure 4, which can avoid the harmful substances generated during the operation of the ultraviolet lamp 3 from being released excessively and further improve the purification performance and purification effect of the air purification device provided by the embodiment of the present disclosure, and provide a good user experience.

In addition, the second photocatalytic net 82 is set between the ultraviolet lamp 3 and the harmful substance removal structure 4, in other words, the second photocatalytic net 82 is located at the side of the harmful substance removal structure 4 towards the ultraviolet lamp 3. Thus, on the one hand, it is convenient to further oxidize and decompose the volatile compounds in the air supply channel by the second photocatalytic net 82 under the photocatalytic effect of the ultraviolet lamp 3, which can help to improve the purification performance and the purification effect. On the other hand, the second photocatalytic net 82 can shelter against the light of the ultraviolet lamp 3, which can avoid aging and failure of the harmful substance removal structure 4 caused by the direct irradiation of the ultraviolet lamp 3. In the third aspect, the second photocatalytic net 82 is located on the inlet side of the harmful substance removal structure 4, which can even the airflow to make the airflow through the harmful substance removal structure 4 more uniform and smoother to achieve a good purification effect.

In some embodiments, the second photocatalytic net 82 covers the side of the harmful substance removal structure 4 towards the ultraviolet lamp 3.

By covering the second photocatalytic net 82 on the side of the harmful substance removal structure 4 towards the ultraviolet lamp 3, on the one hand, the second photocatalytic net 82 can shelter against the light of the ultraviolet lamp 3 and thus avoid the aging and failure of the harmful substance removal structure 4 caused by the direct irradiation of the ultraviolet lamp 3, on the other hand, the second photocatalytic net 82 is located on the inlet side of the harmful substance removal structure 4, which can even the airflow to make the airflow through the harmful substance removal structure 4 more uniform and smoother to provide a good purification effect.

The second photocatalytic net 82 and the harmful substance removal structure 4 may be formed as one piece with a modular design, which is convenient for the overall assembly of the air purification device.

In some embodiments, the housing 1 is provided with both the first photocatalytic net 81 and the second photocatalytic net 82. The first photocatalytic net 81 covers an air outlet side of the purification dust collection structure 2, and the second photocatalytic net 82 covers a side of the harmful substance removal structure 4 towards the ultraviolet lamp 3. The ultraviolet lamp 3 is located between the purification dust collection structure 2 and the harmful substance removal structure 4, and the space between the top of the purification dust collection structure 2 and the bottom of the harmful substance removal structure 4 is not less than 1 L. Specifically, the space between the location of the ultraviolet lamp 3 and the top of the purification dust collection structure 2 may be, for example, 18.5 mm, and the space between the location of the ultraviolet lamp 3 and the bottom of the harmful substance removal structure 4 may be, for example, 82.5 mm.

In some embodiments, both the first photocatalytic net 81 and the second photocatalytic net 82 include a first net-body and a photocatalyst loaded on the first net-body, the photocatalyst being used for a catalytic oxidation reaction with volatile compounds under the action of the ultraviolet lamp 3. The structure is simple and easy to make.

During purification, the ultraviolet lamp 3 forms a photocatalytic system with the first photocatalytic net 81 and the second photocatalytic net 82. Specifically, the ultraviolet light emitted by the ultraviolet lamp 3 photocatalytically reacts with the photocatalyst on the first net-body to generate highly active oxides such as hydroxyl radicals, ozone, etc. The highly reactive oxides oxidize the volatile compounds in the air in the air supply channel to generate carbon dioxide and some intermediate products such as aldehydes, acids, etc. The purification effect may be better by removing the volatile compounds from the air in the air supply channel by oxidation and decomposition by the ultraviolet lamp 3.

The first net-body may be, for example, viscous carbon wool, a nickel-based mesh, an aluminum-based mesh, etc., and the wall thickness of the first net-body is not less than 1 mm.

In addition, the photocatalyst at least includes titanium dioxide.

In some embodiments, when the photocatalytic structure includes the first photocatalytic net 81, the side of the first photocatalytic net 81 towards the inner ring cavity of the ring structure is provided with a first protection net 91.

By setting the first protection net 91 at the side of the first photocatalytic net 81 towards the air outlet channel, the first protection net 91 can be used to support the first photocatalytic net 81 and the purification dust collection structure 2, which enhances the structural strength and is convenient for assembly.

When the photocatalytic structure includes the second photocatalytic net 82, the side of the second photocatalytic net 82 towards the ultraviolet lamp 3 is provided with a second protection net 92.

By setting the second protection net 92 at the side of the second photocatalytic net 82 towards the ultraviolet lamp 3, the second protection net 92 can be used to support the second photocatalytic net 82 and the harmful substance removal structure 4, which enhances the structural strength and is convenient for assembly.

The first protection net 91 and the second protection net 92 may be, for example, an iron mesh, a nylon mesh, a polyethylene glycol terephthalate (PET) mesh, with high support strength and excellent resistance to strong light corrosion.

The materials of the first protection net 91 and the second protection net 92 may be the same or different.

In specific implementations, the harmful substance removal structure 4 is located between the ultraviolet lamp 3 and the air outlet 14.

In other words, the harmful substance removal structure 4 is set on the downstream side of the ultraviolet lamp 3 along the direction of air circulation in the air supply channel. Thus the harmful substances generated during the operation of the ultraviolet lamp 3 can be removed and purified more fully by the harmful substance removal structure 4, which can avoid the harmful substances generated during the operation of the ultraviolet lamp 3 from being released excessively and further improve the purification performance and purification effect of the air purification device provided by the embodiment of the present disclosure, and provide a good user experience.

In some embodiments, the air supply channel is provided with a support cylinder of which both ends are open, and an inner cavity of the support cylinder is in communication with the air inlet 13 and the air outlet 14. The ultraviolet lamp 3 and at least part of the harmful substance removal structure 4 are located in the support cylinder. The support cylinder is provided with a support structure 55, which is used to support the harmful substance removal structure 4.

By setting the support cylinder of which both ends are open in the air supply channel, and arranging the ultraviolet lamp 3 and at least part of the harmful substance removal structure 4 in the support cylinder, on the one hand, a high space utilization rate and good integrity are provided, and the assembly is convenient. On the other hand, the inner cavity of the support cylinder has a gathering and collecting effect on the harmful substances generated during the operation of the ultraviolet lamp 3, which can facilitate full contact between the harmful substances generated during the operation of the ultraviolet lamp 3 and the harmful substance removal structure 4. Thus it can improve the removal efficiency of the harmful substance removal structure 4 on the harmful substances generated during the operation of the ultraviolet lamp 3 and help to improve the purification performance and purification effect and the healthiness of the user.

By setting the support structure 55 in the support cylinder and setting the harmful substance removal structure 4 on the support structure 55, the assembly is convenient.

It should be noted that, in some implementations, the support cylinder may be a separate cylinder, which means that the support cylinder and the housing 1 may be made separately, and then assembled together subsequently.

In some implementations, the support cylinder may also be integrally molded with the housing 1, and such configuration enables the support cylinder and the housing 1 as an integral structure to have improved structural strength and a better performance in bearing the ultraviolet lamp 3 and the harmful substance removal structure 4. Thus the implementation can improve the stability of the ultraviolet lamp 3 and the harmful substance removal structure 4 and ensure the working performance of the air purification device.

In other implementations, the support cylinder may be not provided, and the ultraviolet lamp 3 and at least part of the harmful substance removal structure 4 are directly arranged inside the housing 1.

In specific implementations, a resilient sealing member 42 may be set in an outer edge of the harmful substance removal structure 4 for sealing a space between the harmful substance removal structure 4 and the inner wall of the support cylinder.

By setting the resilient sealing member 42 in the outer edge of the harmful substance removal structure 4, the resilient sealing member 42 can seal the space between the inner wall of the support cylinder and the outer wall of the harmful substance removal structure 4. Thus the air in the air supply channel can pass through the harmful substance removal structure 4 as much as possible and then be discharged through the air outlet 14, which can further improve the efficiency of the harmful substance removal structure 4 in removing the harmful substances generated during the operation of the ultraviolet lamp 3.

The resilient sealing member 42 may be, for example, a sponge, silicone, and so on. In specific implementations, the wall thickness of the resilient sealing member 42 may be, for example, 3 mm.

In some embodiments, when the support cylinder is provided with a support structure 55 for supporting the harmful substance removal structure 4, the support structure 55 is a support flange set along the circumference of the inner wall of the support cylinder.

The configuration of setting the harmful substance removal structure 4 on the support flange inside the support cylinder enables stable support and is convenient for assembly.

In some embodiments, the support structure 55 includes a plurality of support protrusions, and the plurality of support protrusions are arranged at intervals along the circumference of the support cylinder on the inner wall of the support cylinder.

In some embodiments, the harmful substance includes ozone, and the harmful substance removal structure 4 includes an ozone catalytic structure 41, which is used for catalytic oxidation of ozone.

The harmful substance removal structure 4 is located between the ultraviolet lamp 3 and the air outlet 14. With the above configuration, the harmful substance removal structure 4 is set between the ultraviolet lamp 3 and the air outlet 14, i.e., the harmful substance removal structure 4 is set on the downstream side of the ultraviolet lamp 3. Thus when the ozone generated during the operation of the ultraviolet lamp 3 passes through the harmful substance removal structure 4, the ozone catalytic structure 41 can catalyze and oxidize the ozone generated during the operation of the ultraviolet lamp 3, in other words, the ozone catalytic structure 41 can decompose the ozone generated during the operation of the ultraviolet lamp 3, which can improve the purification performance and purification effect and further improve cleanliness and health safety of the air discharged through the air outlet 14.

In specific implementations, the ozone catalytic structure 41 includes a second net-body and an ozone catalyst loaded on the second net-body. The ozone catalyst is used for a catalytic oxidation reaction with ozone for removing the ozone generated during the operation of the ultraviolet lamp 3.

In specific use, when the air purified by the purification dust collection structure 2 and the ultraviolet lamp 3 passes through the ozone catalytic structure 41, the ozone generated during the operation of the ultraviolet lamp 3 catalytically reacts with the ozone catalyst on the ozone catalytic structure 41 in order to decompose the ozone, so as to purify the ozone generated during the operation of the ultraviolet lamp 3 and prevent the ozone from discharging from the air outlet 14 to endanger the health of the user.

The second net-body may be, for example, activated carbon, molecular sieve, aluminum oxide, and so on.

In addition, the ozone catalyst is manganese, such as manganese sulfate.

In specific implementations, the ozone catalytic structure 41 may include a plurality of second net-bodies set in a sequential cascade, each second net-body having the ozone catalyst. Such design can improve the removal efficiency of the harmful substance removal structure 4 on the ozone generated during the operation of the ultraviolet lamp 3, and thus enhance the purification performance and purification effect of the air purifier in the present embodiment.

In some embodiments, the harmful substance removal structure 4 includes at least two ozone catalytic structures 41, the at least two ozone catalytic structures 41 being set in a cascade along the direction from the ultraviolet lamp 3 to the air outlet 14.

By setting multiple ozone catalytic structures 41 along the direction from the ultraviolet lamp 3 to the air outlet 14, the removal efficiency of the harmful substance removal structure 4 on the ozone generated during the operation of the ultraviolet lamp 3 can further be improved, and the purification performance and purification effect of the air purifier in the embodiment of the present disclosure can be improved.

When there are multiple ozone catalytic structures 41, the second photocatalytic net 82 may cover the side of each ozone catalytic structure 41 towards the ultraviolet lamp 3, or the second photocatalytic net 82 may cover the side of the ozone catalytic structure 41 closest to the ultraviolet lamp 3 towards the ultraviolet lamp 3.

It can be understood that, only the second photocatalytic net 82 covering the ozone catalytic structure 41 closest to the ultraviolet lamp 3 is within the irradiation range of the ultraviolet lamp 3. The second photocatalytic net 82 not only can form a photocatalytic system with the ultraviolet lamp 3 to purify and remove volatile compounds in the air in the air supply channel, but also can shelter against light for the multiple ozone catalytic structures 41 to prevent aging and failure of the ozone catalytic structures 41 caused by the irradiation of the light emitted by the ultraviolet lamp 3. The second photocatalytic nets 82 covering other ozone catalytic structures 41 are not within the irradiation range of the ultraviolet lamp 3, but also have a function to even airflow to make the airflow through the ozone catalytic structure 41 more uniform and smoother, and help to improve the removal efficiency of the ozone catalytic structures 41 on the ozone generated during operation of the ultraviolet lamp 3.

In some embodiments, each ozone catalytic structure 41 may be provided with at least two second photocatalytic nets 82, the at least two second photocatalytic nets 82 being spaced apart along the direction from the ultraviolet lamp 3 to the air outlet 14.

In some embodiments, as shown in FIG. 2, FIG. 12 and FIG. 13, the purification dust collection structure 2 includes at least a first filter 21 and a second filter 22 which surrounds the first filter 21. The first filter 21 and the second filter 22 correspond to different types of pollutants to be purified. The types of pollutants include at least formaldehyde and dust.

The first filter 21 may be, for example, a dust filter, and the second filter 22 may be, for example, a formaldehyde filter.

For example, the dust filter may be a high efficiency particulate air filter (HEPA). The dust filter can intercept and remove dust, large particles, impurities, and suspended matter above 0.5 µm in the air by physical adsorption. The dust filter may have, for example, a grade of H11, H12, or H13.

In addition, the formaldehyde filter may be, for example, an activated carbon net loaded with a manganese catalyst, and the formaldehyde filter may purify and remove the formaldehyde in the air by adsorption interception - oxidation decomposition.

During purification, the air entering the air supply channel passes through the dust filter and the formaldehyde filter, the dust filter can remove and purify dust in the air and the formaldehyde filter can remove and purify the formaldehyde in the air with a good purification effect.

In other words, the air entering into the air supply channel from the air inlet 13 passes through the purification dust collection structure 2, wherein the purification dust collection structure 2 can at least remove formaldehyde and dust in the air. The ultraviolet lamp 3 can at least remove the volatile compounds in the air, and the harmful substance removal structure 4 can remove the harmful substances generated during the operation of the ultraviolet lamp 3, thus the purification effect of the air purification device can be further improved.

In some embodiments, the housing 1 includes a lower housing 12 and an upper housing 11 located above the lower housing 12. A fan member is set in the upper housing 11. The purification dust collection structure 2, the ultraviolet lamp 3 and the harmful substance removal structure 4 are located in the lower housing 12.

Specifically, the upper housing 11 and the lower housing 12 are detachably connected together, for example, in a buckle-manner, so that when disassembling and separating the upper housing 11 and the lower housing 12, the fan member and the upper housing 11 can be disassembled together, and the ultraviolet lamp 3, the harmful substance removal structure 4, the purification dust collection structure 2 and the lower housing can be disassembled together, which is convenient and quick for disassembly.

The fan member includes a fan, such as a centrifugal fan, an axial fan, etc.

Specifically, at least part of the air inlet 13 is opened in the side wall of the lower housing 12, and at least part of the air outlet 14 is opened in the top of the upper housing 11.

By forming the air inlet 13 in the lower housing 12 for air entering and the air outlet 14 in the upper housing 11 for air discharge, the air can enter through the air inlet 13, and then be purified by the purification dust collection structure 2, the ultraviolet lamp 3 and the harmful substance removal structure 4, and the purified clean air can be discharged from the air outlet 14 with a better purification effect.

During purification, the external air enters the air supply channel in the air purifier through the air inlet 13 on the side wall of the lower housing 12 under the negative pressure formed by the fan, and is purified by the purification dust collection structure 2, the ultraviolet lamp 3 and the harmful substance removal structure 4. The purified clean air can be discharged from the air outlet 14 by the fan, thereby achieving the purification of air with a better purification effect.

In specific implementations, the side wall of the lower housing 12 may be composed of air-inlet grilles to form a plurality of air inlets 13 on the side wall of the lower housing 12 for increasing the air-inlet volume. The top wall of the upper housing 11 may be composed of air-outlet grilles to form a plurality of air outlets 14 on the top of the upper housing 11 for increasing the air-outlet volume.

It should be noted that in this specification, relational terms such as first and second are only used to distinguish one entity or operation from another, and do not necessarily require or imply that any actual relationship or sequence exists between these entities or operations. Moreover, the terms "comprise", "include", or any other variants thereof are intended to cover a non-exclusive inclusion, so that a process, a method, an article, or a device that includes a list of elements not only includes those elements but also includes other elements that are not expressly listed, or further includes elements inherent to such a process, method, article, or device. An element proceeded by the phrase "includes a ..." does not, without more constraints, preclude the existence of additional identical elements in the process, method, article, or apparatus that includes the element.

Embodiments disclosed above are described to enable a person skilled in the art to implement or use this application. Various modifications made to embodiments will be obvious to a person skilled in the art, and the general principles defined herein may also be implemented in other embodiments without departing from the scope of this application. Therefore, this application is not intended to be limited to these embodiments illustrated herein, but shall be construed in the widest scope consistent with the principles and novel features disclosed herein.

## Claims

1. An air purification device, **characterized in that**:
the air purification device comprises a housing (1) and a purification dust collection structure (2);
the housing (1) is provided with an air inlet (13) and an air outlet (14), wherein an air supply channel is defined between the air inlet (13) and the air outlet (14), and the purification dust collection structure (2) is located in the air supply channel;
the air supply channel is provided with an ultraviolet lamp (3) and a harmful substance removal structure (4), wherein the ultraviolet lamp (3) is used to at least oxidize and decompose volatile compounds in air entering the air supply channel, and the harmful substance removal structure (4) is used to at least remove harmful substances generated during operation of the ultraviolet lamp (3).

2. The air purification device according to claim 1, wherein the air supply channel is provided with a support member (5), and the ultraviolet lamp (3) is mounted on the support member (5); and/or
the housing (1) is provided with a controller (7) therein, wherein the ultraviolet lamp (3) is electrically connected to the controller (7) and the controller is used to control a working state of the ultraviolet lamp (3).

3. The air purification device according to claim 2, wherein the support member (5) is a support cylinder of which both ends are open, wherein an inner cavity of the support cylinder is in communication with the air inlet (13) and the air outlet (14), and the ultraviolet lamp (3) is located inside the support cylinder.

4. The air purification device according to claim 3, wherein the ultraviolet lamp (3) is detachably connected to the support cylinder; and/or
the support cylinder is located between the purification dust collection structure (2) and the air outlet (14), wherein the purification dust collection structure (2) is connected to the housing (1); and/or
the support cylinder is located between the purification dust collection structure (2) and the air outlet (14), wherein the purification dust collection structure (2) includes an end cover (23) at the top, and the support cylinder is connected to the end cover (23).

5. The air purification device according to claim 4, wherein when the ultraviolet lamp (3) is detachably connected to the support cylinder, a cylinder wall of the support cylinder is provided with a first avoiding hole (51), the ultraviolet lamp (3) extends into the support cylinder through the first avoiding hole (51), and one end of the ultraviolet lamp (3) passes through the first avoiding hole (51) and is connected to the support cylinder by a fastening structure, wherein the fastening structure includes a fixed base (6) connected to the support cylinder, and the fixed base (6) is connected to one end of the ultraviolet lamp (3); and/or
when the support cylinder is connected to the end cover (23), the bottom of the support cylinder includes a first clamping member (53) and the end cover (23) includes a second clamping member, wherein the first clamping member (53) and the second clamping member are in matched clamp-connection; the first clamping member (53) is a fastening hook (62) and a top edge of the end cover includes a flange, wherein the fastening hook (62) clamps a bottom surface of the flange.

6. The air purification device according to claim 5, wherein when the ultraviolet lamp (3) is detachably connected to the support cylinder, an inner wall of the support cylinder is further provided with a positioning groove (52), which is arranged opposite to the first avoiding hole (52), the other end of the ultraviolet lamp (3) extends into the positioning groove (52);
the fixed base (6) is provided with a second avoiding hole (61) at a position corresponding to the first avoiding hole (52), one end of the ultraviolet lamp (3) passes through the second avoiding hole (61), and the fixed base (6) is further provided a positioning structure for axial positioning of the ultraviolet lamp (3).

7. The air purification device according to claim 2, wherein the air supply channel is provided with a support cylinder of which both ends are open, wherein an inner cavity of the support cylinder is in communication with the air inlet (13) and the air outlet (14), the ultraviolet lamp (3) is located inside the support cylinder, and the controller (7) is located outside of the support cylinder;
an outer wall of the support cylinder is provided with a containing groove (54), and the controller (7) is located in the containing groove (54).

8. The air purification device according to claim 7, wherein the containing groove (54) is provided with a first mounting member (541), and the controller (7) is provided with a second mounting member (71) which is in matched connection with the first mounting member (541); and/or
a groove wall of the containing groove (54) is provided with a limiting rib (542), wherein the limiting rib (542) is pressed against the outside of the controller (7) for limiting the position of the controller (7) when the controller (7) is located in the containing groove (54).

9. The air purification device according to claim 1, wherein the air supply channel is provided with a photocatalytic structure;
the photocatalytic structure is located within an irradiation range of the ultraviolet lamp (3) and is used to at least oxidize and decompose the volatile compounds in the air in the air supply channel under the effect of the ultraviolet lamp (3).

10. The air purification device according to claim 9, wherein the photocatalytic structure includes a first photocatalytic net (81), the first photocatalytic net (81) being set on the purification dust collection structure (2); and/or
the photocatalytic structure further includes a second photocatalytic net (82), wherein the harmful substance removal structure (4) is located between the ultraviolet lamp (3) and the air outlet (14), and the second photocatalytic net (82) is set between the ultraviolet lamp (3) and the harmful substance removal structure (4);
wherein both the first photocatalytic net (81) and the second photocatalytic net (82) include a first net-body and a photocatalyst loaded on the first net-body, the photocatalyst being used for a catalytic oxidation reaction with the volatile compounds under the effect of the ultraviolet lamp (3); the photocatalyst at least includes titanium dioxide.

11. The air purification device according to claim 10, wherein when the photocatalytic structure includes the first photocatalytic net (81), the purification dust collection structure (2) is a ring structure with a hollow shape, and an inner ring cavity of the ring structure forms part of the air supply channel, and the first photocatalytic net (81) covers an inner ring wall of the ring structure, and one side of the first photocatalytic net (81) towards the inner ring cavity of the ring structure is provided with a first protection net (91);
when the photocatalytic structure further includes the second photocatalytic net (82), the second photocatalytic net (82) covers one side of the harmful substance removal structure (4) towards the ultraviolet lamp (3), and one side of the second photocatalytic net (82) towards the ultraviolet lamp (3) is provided with a second protection net (92).

12. The air purification device according to claim 1, wherein the air supply channel is provided with a support cylinder of which both ends are open, wherein an inner cavity of the support cylinder is in communication with the air inlet (13) and the air outlet (14), the ultraviolet lamp (3) and at least part of the harmful substance removal structure (4) are located in the support cylinder;
the support cylinder is provided with a support structure (55) for supporting the harmful substance removal structure (4), the support structure (55) being a support flange set along the circumference of the inner wall of the support cylinder; and/or an outer edge of the harmful substance removal structure (4) is provided with a resilient sealing member (42) for sealing a space between the harmful substance removal structure (4) and the inner wall of the support cylinder.

13. The air purification device according to claims 1 to 12, wherein the harmful substance includes ozone; the harmful substance removal structure (4) includes an ozone catalytic structure, which is used for catalytic oxidation of the ozone; the harmful substance removal structure (4) is located between the ultraviolet lamp (3) and the air outlet (14);
wherein the ozone catalytic structure includes a second net-body and an ozone catalyst loaded on the second net-body, the ozone catalyst being used for catalytic oxidation reaction with the ozone for removing the ozone; the ozone catalyst at least includes manganese sulfate.

14. The air purification device according to claims 1 to 12, wherein the purification dust collection structure (2) includes at least a first filter (21) and a second filter (22) which surrounds the first filter (21), wherein the first filter (21) and the second filter (22) correspond to different types of pollutants to be purified;
the types of pollutants include at least formaldehyde and dust.

15. The air purification device according to claims 1 to 12, wherein the housing includes a lower housing (12) and an upper housing (11) located above the lower housing (12);
the upper housing (11) is provided with a fan member therein; the purification dust collection structure (2), the ultraviolet lamp (3) and the harmful substance removal structure (4) are located in the lower housing (12);
at least part of the air inlet (13) is opened in a side wall of the lower housing (12), and at least part of the air outlet (14) is opened in the top of the upper housing (11).
